# EUROPEAN PATENT SPECIFICATION

(11) **EP 2 801 499 B1**
(45) Date of publication and mention of the grant of the patent: **28.09.2016**
(21) Application number: 13167069.7
(22) Date of filing: 08.05.2013
(51) Int. Cl.: B60R 21/201, B60R 21/215, B60R 21/217

(54) **Vehicle airbag system for protecting pedestrians and cyclists**
Airbagsystem für ein Fahrzeug zum Schutz von Fussgängern und Radfahrern
Système d'airbag de véhicule pour protéger les piétons et les cyclistes

(43) Date of publication of application: 12.11.2014
(73) Proprietor: ALT Technologies B.V., 3565 AK Utrecht (NL)
(72) Inventor: Verstraeten, Jean-Luc Guy, 3565 AK Utrecht (NL)
(74) Representative: Nederlandsch Octrooibureau

(56) References cited:
- EP-A2- 0 945 312
- DE-A1-102007 062 683
- DE-A1-102008 036 352
- US-A- 5 791 680

## Description

The invention is related to an airbag system to be mounted near the front windscreen of a vehicle, comprising an inflatable airbag in a collapsed state and a cover enveloping the airbag, said cover comprising a weakening area which is designed to give way upon inflating the airbag so as to deploy the airbag out of the cover.

Such an airbag system, integrated in a vehicle, is disclosed in WO-A-2007/045321 which reflects the preamble of claim 1 and claim 10. The purpose of such airbag system is to protect pedestrians and cyclists against an impact with the vehicle. Usually, such impact will result from a head-on collision of the vehicle with a pedestrian or cyclist, involving the person in question to strike the hood and windscreen of the vehicle. Thereby, grave injuries may be sustained, in particular to the upper parts of the person's body such as the head and neck portions.

With the aim of mitigating the impact of the person with respect to the vehicle, and thereby preventing injuries as much as possible, an airbag is installed beneath the hood and close to the windscreen. Upon the detection of a collision with a pedestrian or cyclist, the airbag is inflated such that a cushion is formed which covers the hood and windscreen and possibly the A-columns on both sides of the windscreen. The person will now hit the cushion, in particular with his upper body parts, resulting in less severe injuries or even no injuries at all.

As a result of the location below the hood and close to the windscreen, the airbag system is exposed to weather influences. This means that account should be taken of the influence of water, ice and fumes which may be generated in the motor compartment beneath the hood. Also, it is desirable that the cover provides protection against dust and bacteria. The cover of the airbag itself has hitherto not been designed for operation under such conditions. For instance, the weakening area is often carried out as a line or row of small punctures. As a result, water, dust and the like may penetrate through the weakening area into the interior of the cover. The airbag material may thereby be impaired.

According to the prior art, the airbag system is protected in a box of rigid material, e.g. hard plastic, within which the airbag is accommodated. The box will be opened upon inflating the airbag. The box protects the airbag with respect to gases, fumes and lubricants and the like which are present in the motor compartment beneath' the hood. A disadvantage of this prior art airbag system is that a box of this type is difficult to accommodate within the limited space which is available beneath the hood. Moreover, each type of vehicle will require its own box design, as the rigid box cannot be adapted to the particular shapes at the location of the vehicle for the box.

The object of the invention is therefore to provide an airbag system which allows a better and more versatile placement in the vehicle while maintaining the required protection against adverse conditions as mentioned before. This object is achieved with the features of claim 1 and claim 10.

According to the invention, the cover within which the airbag is accommodated carries a sealing means which shields the weakening area. Thereby, the weakening area is better protected with respect to environmental conditions, in such a way that moist and fluids are prevented from reaching the interior of the cover.

The sealing means may be carried out in several ways. For instance, the sealing may be obtained by spraying a hardening substance on to the cover at the location of the weakening area. The hardened coating will break as soon as the weakening area gives way during the process of inflating the airbag. Preference is however given to a sealing means which is carried out as a flexible strip, for instance of the same material as is used for the cover. However, other kinds of materials are possible as well, provided that the required protective action against external influences may be obtained and the strip will not impede the proper expansion of the airbag. For instance, the sealing means may be carried out as a separate adhesive strip, for instance a strip which is adhered to the weakening area. The strip (either with or without adhesive) may be pressed onto the weakening area, an external strip may for instance be pressed onto the weakening area by means of additional bandages. The strip may either break or tear upon expanding the airbag, or may simply slip away or shear away from the cover. In the latter case, the strip rests against the cover without being connected to the cover. However, it is also possible that the strip and the cover are connected through a shear and/or tear layer, the strength of which is however limited so as not to impede the airbag expansion.

Preferably, the cover may have a tubular shape defining a longitudinal and a circumferential direction, the strip extending over the weakening area in circumferential direction. According to this embodiment, in the process of assembling the airbag system, the airbag may be rolled into the tubular cover. After the cover has been fully wound around the airbag, the cover is sealed so as to complete the wrapping process. In this process, preferably the strip is made to extend over the inside of the weakening area. Once the cover has been wrapped tightly around the airbag, the strip is enclosed between the airbag and the cover, thus compressing the strip firmly against the inner surface of the weakening area. Thereby, the desired closure of the cover in the vicinity of the weakening area is ascertained. The strip thus does not need to be fastened to the weakening area, which has the advantage that the proper tearing of the weakening area is not influenced and the desired behavior of the airbag system, in particular the timely deployment thereof, can be maintained. As mentioned, once the process of expanding takes place, the strip slips along the inside of the cover and thus does not impede the function of the airbag.

In this connection, a further improvement of the airbag system may be obtained in case the strip and the cover are part of a web of material, said web of material being rolled up to form a roll with overlapping inner and outer parts, the longitudinal edge of the outer part being connected, e.g. through an adhesive, to a connection area of said web of material at a distance from the longitudinal edge of the inner part, the strip being formed by said inner part and the weakening area being located in the outer part.

In this embodiment; efficient use is made of a single piece of web material which beforehand has been cut to the required size and shape. By rolling up said piece of web material, while the airbag is being enclosed therein, the inner surface of the outer overlapping part is connected to the outer surface of the inner overlapping part. Thus, the process of assembling the airbag system is greatly simplified.

With the aim of completely closing the cover, the longitudinal ends of the cover may be folded according to a respective fold line which is oriented transversely with respect to the longitudinal direction of the cover. Preferably, the folded ends are connected in the folded position, such as by means of an adhesive, to the rest of the cover.

The cover my comprise at least one opening or slit and the airbag comprises at least one extension which protrudes through the slit, such as an extension carried out as a lip for mounting the airbag to a vehicle and/or an extension comprising a gas feed for inflating the airbag. Here as well, the desired tightness of the airbag system may be obtained in that the slit area around the slit and the airbag may be adhered to each other, preferable in a fluid tight fashion.

By means of suspension tabs of the cover, as well as the tabs of the airbag itself, the airbag system may mounted to a vehicle in the desired location.

The invention is furthermore related to a blank for a cover to be used in the airbag system as described before, said blank having a generally rectangular shape, wherein a weakening area is oriented according to the longitudinal direction of the rectangle, the distance of the weakening area with respect to with respect to one of the longitudinal edges of the rectangle being different from the distance of the weakening area with respect to with respect to the other of the longitudinal edges of the rectangle, the longitudinal edge of the rectangle closest to the weakening area forming a nominal connection edge for connection to a nominal connection area which is situated between the other, free longitudinal edge and the weakening area.

At least one opening or slit may be provided in the blank between the nominal connection area which is situated between the other longitudinal edge and the weakening area, and said other, free longitudinal edge. Preferably, the weakening area is defined by a weakening line. Furthermore, longitudinally opposed ends of the rectangle may have respective lips extending with respect to the rectangle away from each other. By means of these lips, the cover obtained from this blank may be closed at its opposed ends.

The invention is furthermore related to a vehicle, comprising a body having a windscreen and a motor hood adjoining the lower edge of the windscreen, wherein an airbag system as described before is provided at the transition area between the windscreen and the motor hood, the cover of said airbag system being directly suspended with respect to the vehicle body, a crash detection system for detecting the presence of a person in front of the vehicle, and a hood lifting system, and wherein the airbag is inflated and the hood is lifted under control of the crash detection system. The airbag system in deployed condition may cover the windscreen and/or an A-column.

The invention will further be described with respect to the embodiment shown in the drawings.
Figure 1 shows a blank for the cover.
Figures 2a, 2b show the blank of figure 1 with an airbag.
Figures 3a, 3b show the process of rolling the blank around the airbag.
Figures 4a, 4b, 4c show the final steps of the formation of the cover.
Figure 5 shows the completed airbag system.
Figures 6 shows the airbag system being inflated.
Figures 7a, 7b show the airbag system in a vehicle.

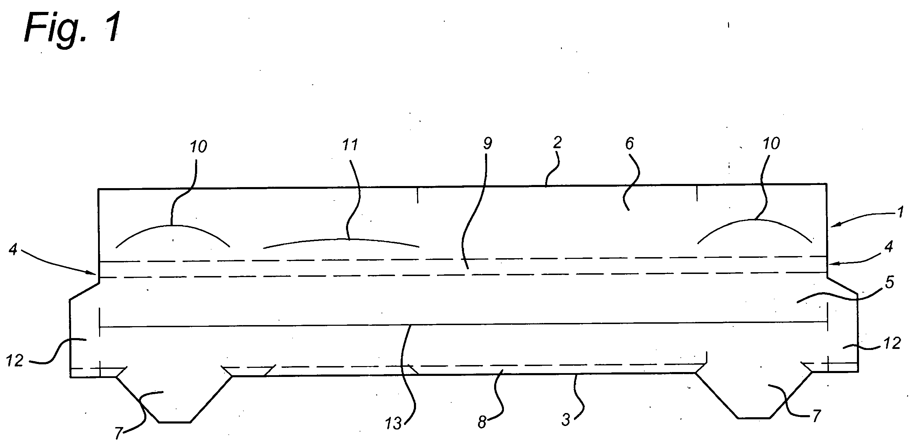

The airbag system will be described on the basis of the several consecutive steps by means of which said system is assembled. Figure 1 shows the blank 1 for the cover which has longitudinal edges 2, 3 and opposite ends 4. In essence, the blank 1 consists of two blank parts, which are the blank part 5 for the cover and the blank part 6 for forming a strip as will be discussed later. The cover blank part 5 borders the one longitudinal edge 2 and the strip blank part 5 borders the opposite longitudinal edge 2. Along the edge 3 two protruding lips 7 are formed on the cover blank part. Furthermore, a nominal connection area 8 is defined along this edge 3. A further nominal connection area 9 is defined in the area enclosed between the strip blank part 6 and the cover blank part 5. Furthermore, slits 10, 11 are formed in this vicinity. Tabs 12 are formed at the opposite ends 4 of the cover blank part 5. A nominal breaking or rupture line 13 is formed in this cover blank part 5 as well. This nominal breaking or rupture line 13 extends between the opposite ends 4.

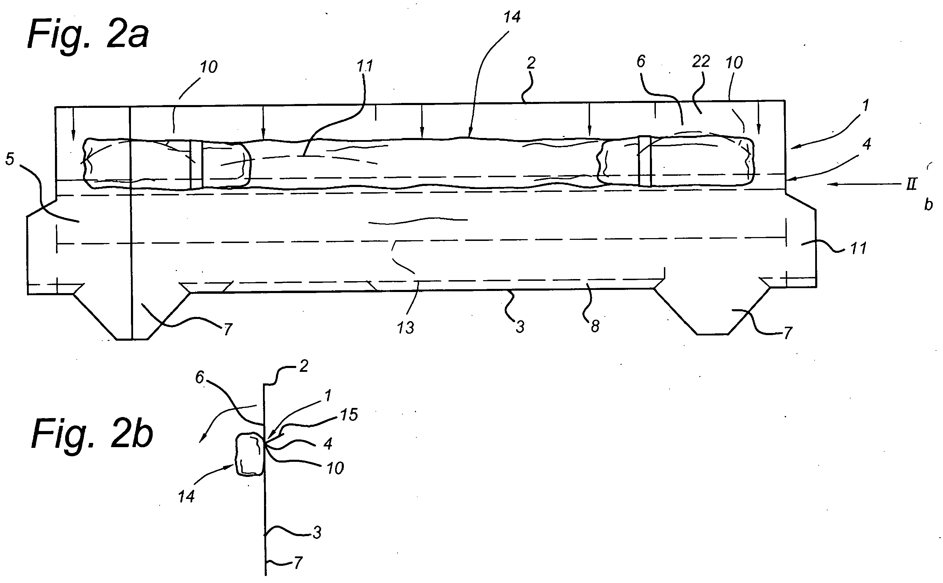

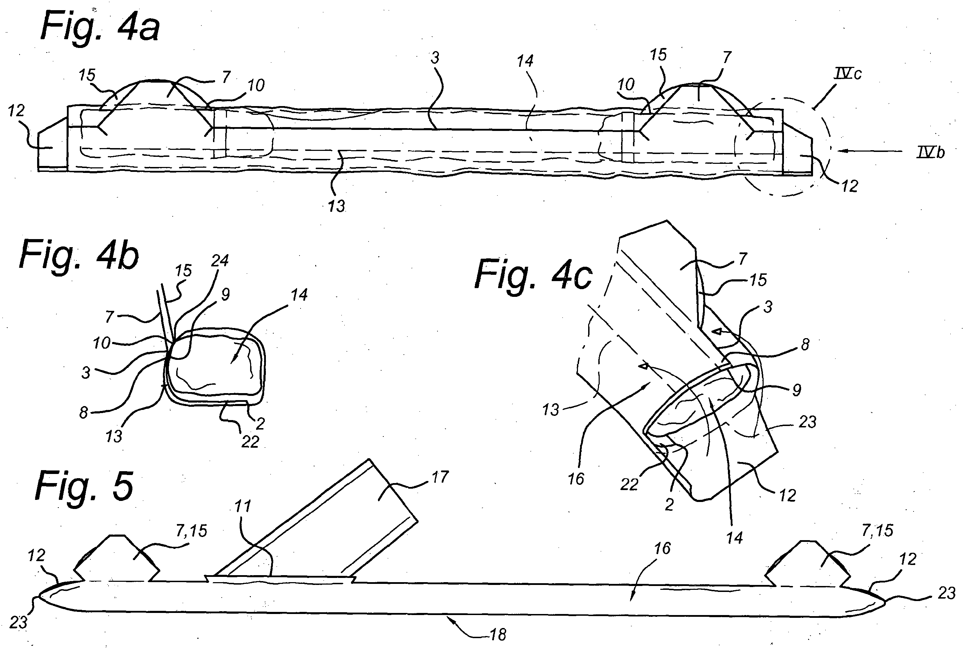

In a first manufacturing step, the airbag 14 itself is positioned on the blank 1, as shown in figure 2a. The strip blank part 6 is then rolled or wrapped over the airbag 14, in such a way that the longitudinal edge 2 of the strip blank part 6 comes to rest loosely between the airbag 14 and the cover blank part 5, forming the actual strip 22 as shown in figures 4b and 4c. The rolling or wrapping action is continued until the edge 3 of the cover blank part edge 5 comes to rest on and is connected to the nominal connection area 9 as shown in figures 4a and 4b. This connection is for instance obtained by means of an adhesive; after this connection has been made, the cover blank part has been closed in itself in circumferential direction.

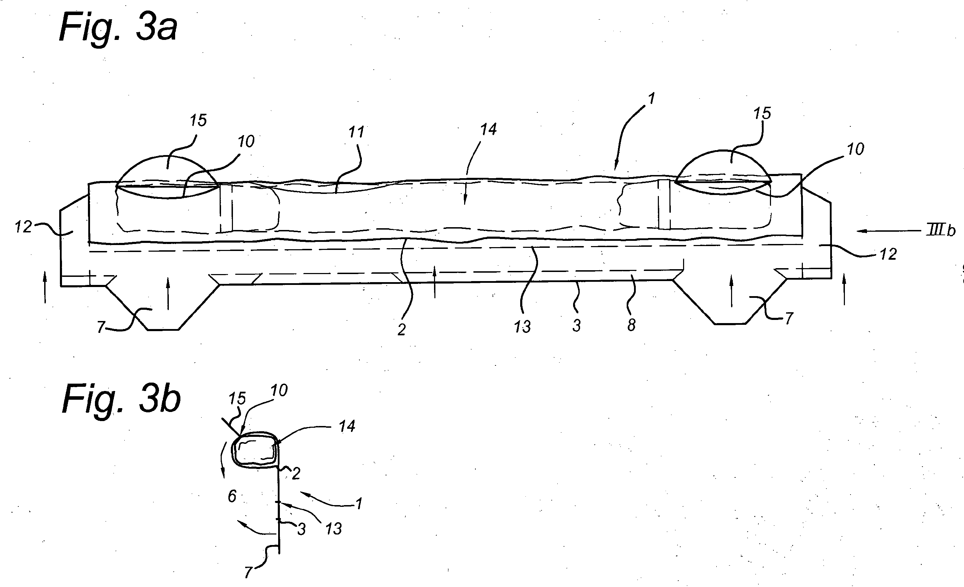

As shown in figures 3 and 4, the airbag has extensions 15 which have been introduced in the slits 10, and which emanate outside the cover through said slits 10. The extensions 15 are for the suspension of the airbag system in a vehicle, as will later be explained. Once the cover blank part 6 has been completely rolled or wrapped around the airbag 14, the lips 7 of the cover come to rest next to these extensions 15 for simultaneously mounting to the vehicle. The tabs 12 at the opposite ends of the blank 1 are folded over onto the roll formed by the airbag 14 according to the transverse fold line 23. Thereby, the cover blank part 6 has been closed in itself in circumferential direction. This step of folding over the tabs 12 completely closes the cover blank part, also in longitudinal direction, thus forming the closed cover 16 itself.

In the cross-sectional view of figure 4b, it is shown that the interior of the cover 16 is shielded with respect to the area around the weakening line 13 by the strip 22. As this strip 22 is held firmly compressed against the inner surface of the cover 16, no fluids will be able to reach the airbag, even in case the outside of the cover is exposed.

The completed airbag system 18 thus obtained has also a gas connection 17 which protrudes through the slit 11, for inflating the airbag. The areas around the slits 10, 11 is provided with an adhesive 24 so as to sealingly adhere the airbag 14 to the inside of the cover 16.

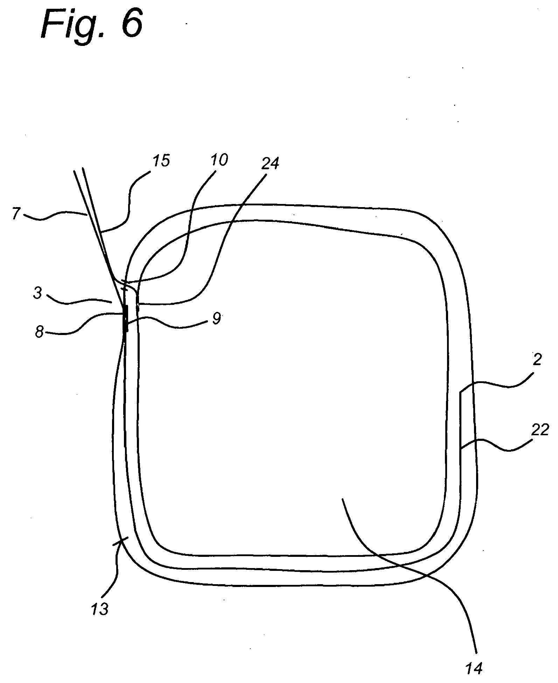

After the airbag 14 is inflated as shown in figure 6, the cover 16 is torn along the weakening line 13. The strip 22, which rests freely between the cover 16 and the airbag 14, initially slips along the inside of the cover and is simply blown away without hampering the proper deployment of the airbag.

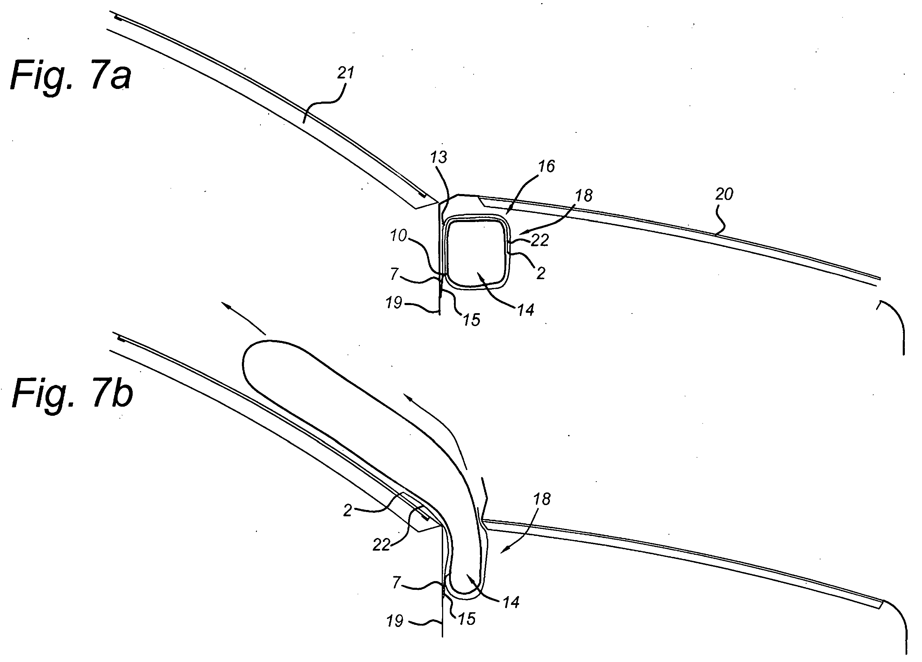

Figure 7a shows the airbag system 18 mounted to the front bulkhead 19 of a passenger, bordering the engine compartment which is further closed by the hood 20. The airbag system is thus located right between the hood 20 and the windshield 21 with A-columns. After inflation, the airbag is able to cover the windshield and the a-columns temporarily, thus preventing harm to pedestrians or cyclists which collide with the vehicle.

### List of reference numerals

- 1.: Blank
- 2.: Longitudinal edge blank
- 3.: Longitudinal edge blank
- 4.: Longitudinal end blank
- 5.: Cover blank part
- 6.: Strip blank part
- 7.: Lip
- 8.: Connection area along edge 3
- 9.: Connection area between cover blank part and strip blank part
- 10.: Slit
- 11.: Slit
- 12.: Tab
- 13.: Weakening line
- 14.: Airbag
- 15.: Suspension extension airbag
- 16.: Cover
- 17.: Gas extension airbag
- 18.: Airbag system
- 19.: Bulkhead vehicle
- 20.: Hood motor compartment
- 21.: Windshield
- 22.: Strip
- 23.: Transverse fold line
- 24.: Adhesive

## Claims

1. Airbag system (18) for protecting a pedestrian or cyclist against collision with a vehicle and to be mounted near the front windscreen (21) of said vehicle, comprising an inflatable airbag (14) in a collapsed state and a cover (16) enveloping the airbag, said cover comprising a weakening area (13) which is located in the cover (16) and designed to give way upon inflating the airbag so as to deploy the airbag out of the cover, **characterized in that** a sealing means is provided which comprises a strip (22) that extends over the weakening area (13), and **in that** the strip (22) and the cover (16) are part of a web or blank of flexible material (1) that is rolled up such that the cover (16) overlaps the strip (22), and wherein the cover is connected at a longitudinal edge (3) to a connection area (4) of said web or blank of material at a distance from a longitudinal edge (2) of the strip (22).

2. Airbag system (18) according to claim 1, wherein the cover (16) is of a tubular shape defining a longitudinal and a circumferential direction, the sealing means (22) extending over the weakening area (13) in said longitudinal and said circumferential direction.

3. Airbag system (18) according to claim 1 or 2, wherein the sealing means comprises a coating, e.g. a sprayed coating.

4. Airbag system (18) according to any of the preceding claims, wherein the strip (22) extends over the inside of the weakening area (13).

5. Airbag system (18) according to any one of claims 1-4, wherein the longitudinal ends (16) of the cover are folded according to a respective fold line (23) which is oriented transversely with respect to the longitudinal direction of the cover (16).

6. Airbag system (18) according to any of the preceding claims, wherein the cover (16) comprises at least one opening (10) or slit and the airbag (14) comprises at least one extension (15) which protrudes through the slit, such as an extension carried out as a lip for mounting the airbag to the vehicle and/or an extension comprising a gas feed for inflating the airbag.

7. Airbag system (18) according to claim 6, wherein the slit area around the slit (10) and the airbag (14) are adhered to each other, preferable in a fluid tight fashion.

8. Airbag system (18) according to any of the preceding claims, wherein the cover (16) comprises at least one suspension tab (7) for mounting to the vehicle.

9. Airbag system (18) according to any of the preceding claims, wherein the weakening area is defined by a weakening line (13), such as a perforation line.

10. Blank (1) for use in the airbag system (18) with an inflatable airbag (14) according to any of the preceding claims, **characterized in that** the blank is formed of a flexible material that defines a strip part (6, 22) and a cover part (5, 16), **in that** the blank is adapted to be rolled up such that the cover part envelops the airbag in a collapsed state and overlaps the strip part, **in that** the cover part comprises a weakening area (13) which is designed to give way upon inflating the airbag so as to deploy the airbag, **in that** the strip parts extends over the weakening area (13) to provide a seal when the blank is rolled up, and **in that** the cover part is connectable at a longitudinal edge (3) to a connection area (4) of said blank at a distance from a longitudinal edge (2) of the strip part.

11. Blank (1) according to claim 10, said blank having a generally rectangular shape, wherein the weakening area (13), e.g. a weakening line (13), is oriented according to the longitudinal direction of the rectangle, one (3) of the longitudinal edges of the rectangle defining a nominal connection area (8) for connection, e.g. through an adhesive, to a nominal connection area (4) which is situated between the other, free longitudinal edge (2) and the weakening area (13) and at a distance from both said other, free longitudinal edge (2) and said weakening area (13).

12. Blank (1) according to claim 11, wherein the distance of the weakening area (13) with respect to the connection area (8) is smaller than the distance between the weakening area (13) and the other, free longitudinal edge (2).

13. Blank (1) according to any one of claims 10-12, wherein at least one opening or slit (10) is provided between the nominal connection area (8) and the other, free longitudinal edge (2).

14. Vehicle, comprising a body having a windscreen (21) and a motor compartment hood (2) adjoining the lower edge of the windscreen, wherein an airbag system (18) according to any of claims 1-9 is provided at the transition area between the windscreen and the motor hood, the cover (14) of said airbag system being directly suspended with respect to the vehicle body, a crash detection system for detecting the presence of a person in front of the vehicle, and a hood lifting system, and wherein the airbag is inflated and the hood is lifted under control of the crash detection system so as to cover the windscreen and/or an A-column.

## Patentansprüche

1. Airbagsystem (18) zum Schutz eines Fußgängers oder Radfahrers vor einer Kollision mit einem Fahrzeug, und das in der Nähe der vorderen Windschutzscheibe (21) des Fahrzeugs angebracht werden kann, das einen aufblasbaren Airbag (14) in einem zusammengelegten bzw. kollabierten Zustand aufweist und eine Abdeckung (16) aufweist, die den Airbag umhüllt, wobei die Abdeckung einen Abschwächungs- bzw. Schwachbereich (13) aufweist, der in der Abdeckung (16) angeordnet ist und der ausgelegt ist, um beim Aufblasen des Airbags nachzugeben, um so den Airbag aus der Abdeckung heraus in Einsatz zu bringen, **dadurch gekennzeichnet dass** Abdichtungsmittel vorgesehen sind, die einen Streifen (22) aufweisen, der sich über den Abschwächungsbereich (13) erstreckt, und dadurch dass der Streifen (22) und die Abdeckung (16) einen Teil einer Bahn oder eines Zuschnittes aus flexiblem Material (1) bilden, das aufgerollt ist, so dass die Abdeckung (16) den Streifen (22) überlappt, und wobei die Abdeckung entlang einer Längskante (3) mit einem Verbindungsbereich (4) der Bahn oder des Zuschnittes aus Material verbunden ist, und zwar in einem Abstand von der Längskante (2) des Streifens (22).

2. Airbagsystem (18) nach Anspruch 1, wobei die Abdeckung (16) eine röhren- bzw. schlauchförmige Form hat, die eine Längsrichtung und eine Umfangsrichtung definiert, wobei sich die Dichtmittel (22) über den Abschwächungsbereich (13) in der Längsrichtung und der Umfangsrichtung erstrecken.

3. Airbagsystem (18) nach Anspruch 1 oder 2, wobei die Dichtmittel eine Beschichtung, z.B. eine aufgesprühte Beschichtung, aufweisen.

4. Airbagsystem (18) nach einem der vorhergehenden Ansprüche, wobei sich der Streifen (22) über das Innere bzw. die Innenseite des Abschwächungsbereichs (13) erstreckt.

5. Airbagsystem (18) nach einem der Ansprüche 1-4, wobei die Längsenden (16) der Abdeckung gemäß einer entsprechenden Faltlinie (23) gefaltet sind, die quer in Bezug auf die Längsrichtung der Abdeckung (16) ausgerichtet ist.

6. Airbagsystem (18) gemäß einem der vorhergehenden Ansprüche, wobei die Abdeckung (16) wenigstens eine Öffnung (10) oder einen Schlitz aufweist und der Airbag (14) wenigstens eine Verlängerung (15) aufweist, die sich durch den Schlitz erstreckt, wie beispielsweise eine Verlängerung, die als eine Lippe zur Anbringung des Airbags an dem Fahrzeug ausgeführt ist und/oder eine Verlängerung, die eine Gaszuführung zum Aufblasen des Airbags aufweist.

7. Airbagsystem (18) nach Anspruch 6, wobei der Schlitzbereich um den Schlitz (10) und der Airbag (14) aneinander haften, vorzugsweise auf eine strömungsmitteldichte Weise.

8. Airbagsystem (18) nach einem der vorhergehenden Ansprüche, wobei die Abdeckung (16) wenigstens eine Aufhängungslasche (7) zur Anbringung an dem Fahrzeug aufweist.

9. Airbagsystem (18) nach einem der vorhergehenden Ansprüche, wobei der Abschwächungsbereich durch eine Abschwächungslinie (13), wie beispielsweise eine Perforationslinie, definiert ist.

10. Zuschnitt (1) zur Verwendung in dem Airbagsystem (18) mit einem aufblasbaren Airbag (14) gemäß einem der vorhergehenden Ansprüche, **dadurch gekennzeichnet, dass** der Zuschnitt aus einem flexiblen Material gebildet ist, das einen Streifenteil (6, 22) und einen Abdeckungsteil (5, 16) bildet, dadurch dass der Zuschnitt ausgelegt ist, um aufgerollt zu werden, so dass der Abdeckungsteil den Airbag in einem zusammengelegten Zustand umhüllt und den Streifenteil überlappt, dadurch dass der Abdeckungsteil einen Abschwächungsbereich (13) aufweist, der ausgelegt ist, um beim Aufblasen des Airbags nachzugeben, um so den Airbag auszulösen bzw. in Einsatz zu bringen, dadurch dass sich der Streifen über den Abschwächungsbereich (13) erstreckt um eine Dichtung vorzusehen, wenn der Zuschnitt aufgerollt ist, und dadurch, dass die Abdeckung mit einer Längskante (3) eines Verbindungsbereichs (4) des Zuschnittes in einem Abstand von der Längskante (2) des Streifenteils verbindbar ist.

11. Zuschnitt (1) nach Anspruch 10, wobei der Zuschnitt eine im Allgemeinen rechteckige Form hat, wobei der Abschwächungsbereich (13), z.B. eine Abschwächungslinie (13), gemäß der Längsrichtung des Rechteckes ausgerichtet ist, wobei eine (3) der Längskanten des Rechteckes einen vorbestimmten bzw. nominalen Verbindungsbereich (8) zur Verbindung, z.B. durch ein Klebemittel, mit einem vorbestimmten bzw. nominalen Verbindungsbereich (4) definiert, der zwischen der anderen, freien Längskante (2) und dem Abschwächungsbereich (13) und in einem Abstand von beiden, der andere, freien Längskante (2) und dem Abschwächungsbereich (13) angeordnet ist.

12. Zuschnitt (1) nach Anspruch 11, wobei der Abstand des Abschwächungsbereichs (13) in Bezug auf den Verbindungsbereich (8) kleiner ist als der Abstand zwischen dem Abschwächungsbereich (13) und der anderen, freien Längskante (2).

13. Zuschnitt (1) nach einem der Ansprüche 10-12, wobei wenigstens eine Öffnung oder ein Schlitz (10) zwischen dem nominalen Verbindungsbereich (8) und der anderen, freien Längskante (2) vorgesehen ist.

14. Fahrzeug, das Folgendes aufweist: einen Körper mit einer Windschutzscheibe (21) und einer Motorgehäusehaube (2), die an der unteren Kante der Windschutzscheibe anschließt, wobei ein Airbagsystem (18) nach einem der Ansprüche 1-9 an dem Übergangsbereich zwischen der Windschutzscheibe und der Motorhaube vorgesehen ist, wobei die Abdeckung (14) des Airbagsystems direkt in Bezug auf den Fahrzeugkörper aufgehängt ist, ein Zusammenstoßdetektionssystem zum Detektieren des Vorhandenseins einer Person vor dem Fahrzeug, und ein Haubenanhebesystem, und wobei der Airbag aufgeblasen und die Haube angehoben wird unter Steuerung des Zusammenstoßdetektionssystems, um so die Windschutzscheibe und/oder eine A-Säule abzudecken.

## Revendications

1. Système d'airbag (18) pour protéger un piéton ou un cycliste vis-à-vis d'une collision avec un véhicule et à monter à proximité du pare-brise avant (21) dudit véhicule, comprenant un airbag gonflable (14) dans un état aplati et un recouvrement (16) enveloppant l'airbag, ledit recouvrement comprenant une zone d'affaiblissement (13) qui est située dans le recouvrement (16) et conçue pour donner un passage lors du gonflage de l'airbag de manière à déployer l'airbag à l'extérieur du recouvrement, **caractérisé en ce que** des moyens d'étanchéité sont fournis qui comprennent une bande (22) qui s'étend sur la zone d'affaiblissement (13), et **en ce que** la bande (22) et le recouvrement (16) sont une partie d'une toile ou d'une ébauche de matériau souple (1) qui est roulée de telle sorte que le recouvrement (16) recouvre la bande (22), et dans lequel le recouvrement est relié au niveau d'un bord longitudinal (3) à une zone de liaison (4) de ladite toile ou de l'ébauche de matériau à distance du bord longitudinal (2) de la bande (22).

2. Système d'airbag (18) selon la revendication 1, dans lequel le recouvrement (16) a une forme tubulaire définissant une direction longitudinale et une direction circonférentielle, les moyens d'étanchéité (22) s'étendant sur la zone d'affaiblissement (13) dans lesdites directions longitudinale et circonférentielle.

3. Système d'airbag (18) selon les revendications 1 ou 2, dans lequel les moyens d'étanchéité comprennent un revêtement, par exemple un revêtement pulvérisé.

4. Système d'airbag (18) selon l'une quelconque des revendications précédentes, dans lequel la bande (22) s'étend sur l'intérieur de la zone d'affaiblissement (13).

5. Système d'airbag (18) selon l'une quelconque des revendications 1 à 4, dans lequel les extrémités longitudinales (16) du recouvrement sont pliées conformément à une ligne de pli respective (23) qui est orientée transversalement par rapport à la direction longitudinale du recouvrement (16).

6. Système d'airbag (18) selon l'une quelconque des revendications précédentes, dans lequel le recouvrement (16) comprend au moins une ouverture (10) ou fente et l'airbag (14) comprend au moins un prolongement (15) qui fait saillie à travers la fente, tel qu'un prolongement supporté à l'extérieur sous la forme d'une lèvre de montage de l'airbag sur le véhicule et/ou un prolongement comprenant une alimentation en gaz pour gonfler l'airbag.

7. Système d'airbag (18) selon la revendication 6, dans lequel la zone de fente située autour de la fente (10) et l'airbag (14) sont collés l'un à l'autre, de préférence d'une manière étanche à un fluide.

8. Système d'airbag (18) selon l'une quelconque des revendications précédentes, dans lequel le recouvrement (16) comprend au moins une patte de suspension (7) pour montage sur le véhicule.

9. Système d'airbag (18) selon l'une quelconque des revendications précédentes, dans lequel la zone d'affaiblissement est définie par une ligne d'affaiblissement (13), telle qu'une ligne de perforations.

10. Ébauche (1) destinée à être utilisée dans le système d'airbag (18) avec un airbag gonflable (14) selon l'une quelconque des revendications précédentes, **caractérisée en ce que** l'ébauche est formée d'un matériau souple qui définit une partie de bande (6, 22) et une partie de recouvrement (5, 16), **en ce que** l'ébauche est adaptée pour être roulée de telle sorte que la partie de recouvrement enveloppe l'airbag dans un état aplati et recouvre la partie de bande, **en ce que** la partie de recouvrement comprend une zone de d'affaiblissement (13) qui est conçue pour donner un passage lors d'un gonflage de l'airbag de manière à déployer l'airbag, **en ce que** les parties de bande s'étendent sur la zone d'affaiblissement (13) pour fournir un joint lorsque l'ébauche est roulée, et **en ce que** la partie de recouvrement peut être reliée au niveau d'un bord longitudinal (3) à une zone de liaison (4) de l'ébauche à distance du bord longitudinal (2) de la partie de bande.

11. Ébauche (1) selon la revendication 10, ladite ébauche ayant une forme générale rectangulaire, dans laquelle la zone d'affaiblissement (13), par exemple une ligne d'affaiblissement (13), est orientée selon la direction longitudinale du rectangle, l'un (3) des bords longitudinaux du rectangle définissant une zone de liaison nominale (8) pour une liaison, par exemple par l'intermédiaire d'un adhésif, avec une zone de liaison nominale (4) qui est située entre l'autre bord longitudinal libre (2) et la zone d'affaiblissement (13), et à distance à la fois dudit autre bord longitudinal libre (2) et de ladite zone d'affaiblissement (13).

12. Ébauche (1) selon la revendication 11, dans laquelle la distance de la zone d'affaiblissement (13) par rapport à la zone de liaison (8) est plus petite que la distance entre la zone d'affaiblissement (13) et l'autre bord longitudinal libre (2).

13. Ébauche (1) selon l'une quelconque des revendications 10 à 12, dans laquelle au moins une ouverture ou fente (10) est agencée entre la zone de liaison nominale (8) et l'autre bord longitudinal libre (2).

14. Véhicule, comprenant une carrosserie ayant un pare-brise (21) et un capot de compartiment moteur (2) adjacent au bord inférieur du pare-brise, dans lequel un système d'airbag (18) selon l'une quelconque des revendications 1 à 9 est agencé au niveau de la zone de transition entre le pare-brise et le capot moteur, le recouvrement (14) du système d'airbag étant directement suspendu par rapport à la carrosserie du véhicule, un système de détection d'accident pour détecter la présence d'une personne à l'avant du véhicule, et un système de levage de capot, et dans lequel l'airbag est gonflé et le capot est levé sous la commande du système de détection d'accident de manière à recouvrir le pare-brise et/ou une colonne A.
